# EUROPÄISCHE PATENTSCHRIFT

(11) **EP 0 525 314 B1**
(45) Veröffentlichungstag und Bekanntmachung des Hinweises auf die Patenterteilung: **08.03.1995**
(21) Anmeldenummer: 92108137.8
(22) Anmeldetag: 14.05.1992
(51) Int. Cl.: B60T 8/40, B60T 8/42

(54) **Hydraulikpumpe**
Hydraulic pump
Pompe à hydraulique

(30) Priorität: 29.07.1991 DE 4125027
(43) Veröffentlichungstag der Anmeldung: 03.02.1993
(73) Patentinhaber: ITT Automotive Europe GmbH, 60488 Frankfurt (DE)
(72) Erfinder: Beck, Erhard, W-6290 Weilburg (DE)

(56) Entgegenhaltungen:
- EP-A- 0 327 218
- DE-A- 3 701 168
- DE-A- 4 130 729

## Beschreibung

Die Erfindung betrifft eine Hydraulikpumpe, insbesondere für eine hydraulische Bremsschlupfregelanlage nach dem Oberbegriff des Anspruchs 1.

Aus der deutschen Patentanmeldung mit dem amtlichen Aktenzeichen P 40 32 797.3 ist bereits eine Hydraulikpumpe bekannt, deren Kolben gegenüber einem Arbeitsraum metallisch gedichtet, d.h. ohne Anordnung spezieller Dichtungen, im Pumpenzylinder axial beweglich geführt ist. Infolge der Spalt- bzw. Leckageströme im Bereich des dichtungslosen Kolbenschaftes ist der Kolben mit einem Leckageringraum versehen, so daß die vom Arbeitsraum überströmende Leckflüssigkeit aufgefangen und wieder dem Arbeitsraum zugeführt werden kann. Bei der Hydraulikpumpe der angegebenen Art sind infolge der metallischen Abdichtung sehr kleine Passungsspiele zwischen Pumpenzylinder und Kolben erforderlich, um leckageminimierte Laufspiele des Kolbens in der Zylinderbohrung zu gewährleisten. Hierzu bedarf es höchster Präzision, die nur durch Einsatz kosten- und zeitintensiver Fertigungsmittel und Fertigungsmethoden zur gewünschten engtolerierten Spielpassung des Kolbens im Pumpenzylinder führt.

Aus der EP-A-0 327 218 ist eine gattungsgemäße Hydraulikpumpe bekannt, deren Kolben zwischen Arbeitsraum und Leckage-Ringraum mit einem Dichtring versehen ist. Als nachteilig ist bei dieser bekannten Hydraulikpumpe anzusehen, daß eine hohe Dichtwirkung im Betrieb auch mit einer hohen Dichtwirkung bei Stillstand der Pumpe einhergeht. Ein beim Pumpenstillstand, beispielsweise durch Abkühlung des Druckmittels, im Arbeitraum auftretender Unterdruck kann somit nicht durch Nachsaugen über den Leckageringraum ausgeglichen werden, so daß der Unterdruck über einen langen Zeitraum bestehen kann, was die Wahrscheinlichkeit eines unerwünschten Ansaugens von Luft in den Arbeitsraum erhöht.

Daher ist es die Aufgabe der Erfindung, eine Hydraulikpumpe der eingangs genannten Gattung dahingehend weiter zu entwickeln, daß unter Umgehung der vorgenannten Nachteile eine Hydraulikpumpe geschaffen wird, die unter Einsatz einfacher, kostengünstiger Mittel, respektive Herstellverfahren, ein Kolbenlaufspiel mit größeren Toleranzen zuläßt, ohne eine Einschränkung hinsichtlich der gewünschten Dichtwirkung während des Pumpbetriebs und der druckausgleichenden Wirkung bei Pumpenstillstand hinnehmen zu müssen.

Diese Aufgabe wird erfindungsgemäß durch die den Patentanspruch 1 kennzeichnenden Merkmale gelöst, wonach der dem Arbeitsraum zugewandte Bereich des Kolbens einen Dichtring aufweist, dessen auf die Wandung des Pumpenzylinders wirksame Anpreßkraft proportional zum Druck im Arbeitsraum einstellbar ist. Hierdurch ist gewährleistet, daß im Betrieb der Pumpe der im Arbeitsraum aufgebaute Pumpendruck den Dichtring derart beaufschlagt, daß ein in Umfangsrichtung wirksames Druckpolster die Dichtkraft auf die Zylinderwandung erhöht. Andererseits entsteht bei Pumpenstillstand keine hydrodynamische Servokraft, die den Dichtring radial aufweitet, so daß infolge verminderter Dichtringwirkung (Mittelstellung in der Nut) ein Druckausgleich zwischen dem Arbeitsraum und dem Leckageraum über den Nutgrund stattfinden kann.

Durch die in den Unteransprüchen aufgezeigten Maßnahmen werden zweckmäßige Ausbildungen der Erfindung angegeben, die im Zusammenhang mit den weiteren Merkmalen und Vorteilen der Erfindung nachfolgend anhand zweier Zeichnungen näher dargestellt und erläutert sind.

Es zeigt:
- Die Figur 1: eine Hydraulikpumpe im Längsschnitt, angeschlossen an einer schlupfgeregelten Bremsanlage.
- Die Figur 2: einen vergrößerten Ausschnitt des Kolbens in der Zylinderbohrung im Bereich des Dichtringes.

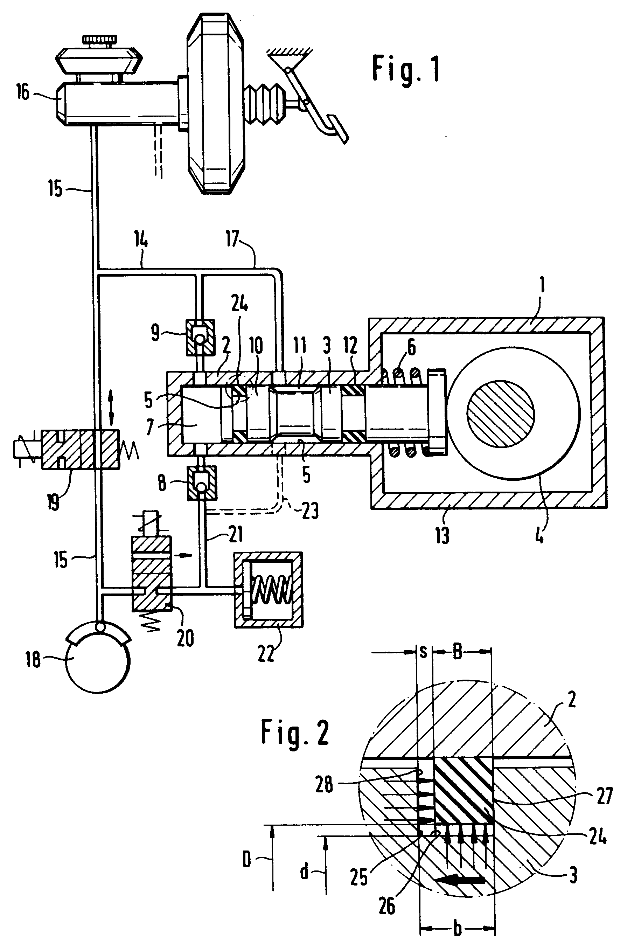

Die in Figur 1 dargestellte Hydraulikpumpe weist ein Pumpgehäuse 1 mit einem Pumpenzylinder 2, einem Kolben 3 und einem Exzentergetriebe 4 auf. Der Kolben 3 ist in einer Kolbenbohrung 5 des Pumpenzylinders 2 axial verschiebbar gelagert und wird von einer am Gehäuse 1 abgestützten Druckfeder 6 gegen die Hubkurve des Exzentergetriebes 4 gedrückt. Der Kolben 3 begrenzt mit seiner dem Exzentergetriebe 4 abgewandten Stirnseite einen durch das geschlossene Ende der Zylinderbohrungen 5 gebildeten Arbeitsraum 7, der an ein Einlaßventil 8 und ein Auslaßventil angeschlossen ist, die in der Zeichnung als federbelastete Rückschlagventile dargestellt sind. Der Kolben 3 weist innerhalb der Zylinderbohrung 5 drei unterschiedlich ausgebildete Abschnitte auf. Der dem Arbeitsraum 7 benachbarte Abschnitt 10 ist mit einem Dichtring 24 versehen, der während des Pumpenlaufs für die erforderliche Abdichtung der Gleitflächen zwischen der Zylinderbohrung 5 und dem Kolben 3 sorgt. Der mittlere Abschnitt des Kolbens 3 ist mit einer Ringnut versehen, durch die ein Ringraum 11 gebildet ist, wobei dessen axiale Länge dem Kolbenhub entspricht. Der dem Exzentergetriebe 4 benachbarte Abschnitt des Kolbens 3 weist innerhalb der Kolbenbohrung 5 einen aus elastomeren Material hergestellten Dichtring 12 auf, durch den der Ringraum 11 gegenüber dem das Exzentergetriebe 4 aufnehmende Gehäuseraum 13 abgedichtet ist.

Das Auslaßventil 9 der Hydraulikpumpe ist über eine Förderleitung 14 an einen Bremskreis 15 eines Bremsdruckgebers 16 einer hydraulischen, schlupfgeregelten Fahrzeugbremsanlage angeschlossen. Über eine Leitung 17 ist auch der Ringraum 11 mit der Förderleitung 14 verbunden. An den Bremskreis 15 ist eine Radbremse 18 angeschlossen, die über zwei Magnetventile 19, 20 steuerbar ist. Von dem in der Grundstellung geschlossenen Magnetventil 20 führt eine Förderleitung 21 zu dem Einlaßventil 8 der Hydraulikpumpe. Diese Förderleitung 21 ist außerdem mit einem Niederdruckspeicher 22 verbunden.

Bei der dargestellten Fahrzeugbremsanlage sind der Bremsdruckgeber 16 und die über den Bremskreis 15 daran angeschlossene Aggregate mit Bremsflüssigkeit gefüllt und entlüftet. Lufteinschlüsse sind unerwünscht, da sie den Volumenbedarf bei einer Bremsbetätigung erhöhen. Mit Bremsflüssigkeit gefüllt sind somit auch der Arbeitsraum 7 und der Ringraum 11 der Hydraulikpumpe. Bei gelöster Bremse herrscht in den mit dem Bremsdruckgeber 16 verbundenen Räume ein Atmosphärendruck. In der durch das geschlossene Magnetventil 20 vom Bremskreis 15 getrennten Förderleitung 21 herrscht der durch den Niederdruckspeicher 22 vorgegebene Druck. Der Druck im Arbeitsraum 7 kann unterschiedlich sein. Er richtet sich nach den Öffnungsdrücken des Einlaßventils 8 und den Auslaßventils 9. Ist der Druck in der Förderleitung 21 niedrig (Pumpenstillstand), so kann beispielsweise im Arbeitsraum 7, bedingt durch eine Abkühlung ein Druckgefälle entstehen. Hierbei wird über den permanent mit der Förderleitung 14 in Verbindung stehende Ringraum 11 verhindert, daß im Arbeitsraum 7 ein Vakuum entsteht, wozu über den Dichtring 24 des Kolbens 3 Bremsflüssigkeit in den Arbeitsraum 7 strömt.

### Funktionsweise:

Während einer schlupfgeregelten Bremsdruckreduzierung fördert die Hydraulikpumpe das Fluid über das offen geschaltete Magnetventil 20 aus der Radbremse 18 in den an den Bremsdruckgeber 6 angeschlossenen Teil des Bremskreises 15, wobei sich das in der Grundstellung stromlos offen geschaltete Magnetventil 19 in der den Bremskreis 15 sperrenden Stellung befindet. Durch Schalten der beiden Magnetventile 19, 20 in ihre Sperrstellung wird der jeweils in der Radbremse 18 anstehende Bremsdruck konstant gehalten. Werden zur erneuten Erhöhung des Bremsdruckes an der Radbremse 18 die Magnetventile 19, 20 in die in der Zeichnung dargestellte Stellung zurückgeschaltet, so besteht bei der Verwendung von Hydraulikpumpen gemäß dem Stand der Technik bei deaktivierter Pumpe die Gefahr, daß sich im Arbeitsraum 7 ein Unterdruck einstellen kann, falls der Druck in der Förderleitung 21 soweit abgesunken ist, daß das Einlaßventil 8 nicht mehr geöffnet wird. Auch in dieser Betriebsphase sorgt der Ringraum 11 und der Dichtring 24 für die Verbindung des Arbeitsraums 7 zur druckseitigen Förderleitung 14, so daß Bremsflüssigkeit über die am Bremsdruckgeber 16 angeschlossene Leitung 17 nachströmen kann.

Anstelle der Verbindung des Ringraums 11 über die Leitung 17 mit der auslaßseitigen Förderleitung 14 kann in einer alternativen Ausgestaltung der Ringraum 11 über eine unterbrochen dargestellte Leitung 23 an die pumpeneinlaßseitige Förderleitung 21 angeschlossen sein. Auch durch diese Ausgestaltung wird das Eindringen von Luft in den Arbeitsraum 7 zuverlässig vermieden, wobei der Öffnungsdruck des Einlaßventils 8 so groß gewählt wird, daß das Saugvermögen der Hydraulikpumpe nicht ausreicht, um den Druck in Förderleitung 21 unter den Atmosphärendruck abzusenken.

Einen detaillierten Überblick zum Aufbau und zur Funktion des im Abschnitt 10 am Kolben 3 angeordneten Dichtrings 24 geht aus Figur 2 hervor, wonach der Dichtring 24 ein gegenüber der Breite b der Kolbenringnut 25 kleinere Breite B aufweist. Weiterhin ist der kleinere Durchmesser d des Kolbens 3 im Bereich der Kolbenringnut 25 gegenüber dem Innendurchmesser D des Dichtrings 24 kleiner ausgeführt, so daß in Abhängigkeit vom Pumpenhub des Kolbens 3 das im Arbeitsraum 7 komprimierte Druckmittelvolumen entlang der Kontur des Kolbens 3 bis in die Kolbenringnut 25 strömen kann. Figur 2 zeigt die am Dichtring 24 wirksame hydrodynamische Druckkraft während des vom Kolben 3 nach rechts ausgeführten Kompressionshubes. Der Dichtring 24 stützt sich zunächst infolge der zwischen dem Pumpenzylinder 2 und dem Dichtring 24 wirksamen Wandreibung an der rechten Schulter der Kolbenringnut 25 dichtend ab, so daß an der linken Schulter der Kolbenringnut 25 zweckmäßigerweise das gesamte axiale Ringspiel (Spiel s) zur Wirkung gelangt. Damit ist die Voraussetzung geschaffen, daß das in der Kolbenringnut 25 einströmende Fluid in den Nutgrund 26 ungehindert gelangen kann. Die hierdurch an der Innenwandung des Dichtrings 24 angreifende hydrodynamische Umfangskraft weitet den Dichtring 24 auf, um ihn an die Wandung des Pumpenzylinders 2 zu pressen. Bei Pumpenstillstand wird infolge der Druckabsenkung im Arbeitsraum 7 auch der Nutgrund 26 und damit der Dichtring 24 druckentlastet, so daß der Dichtring 24 seine ursprüngliche entspannte Form (Nenndurchmesser) einnimmt. Gleichzeitig stellt der zur rechten und linken Seite am Dichtring 24 anstehende Flüssigkeitsdruck diesen in der Nut in eine Mittellage ein, sobald, beispielsweise infolge des Abkühlvorgangs der Pumpe, der Druck im Arbeitsraum 7 sinkt. Das im Ringraum 11 anstehende Druckmittel kann sodann ungehindert über die freigegebene rechte Schulter 27 der Kolbenringnut 25 in den Nutgrund 26 und von dort über die linke Schulter 28 der Kolbenringnut 25 in Richtung des Arbeitsraumes 7 strömen, um den Druckausgleich herzustellen. Ferner wird darauf verwiesen, daß die Funktion des hydrodynamisch beaufschlagten Dichtringes 24 unabhängig von der Richtung der Kolbenbewegung und damit vom Druckmittelstrom ist, so daß sich die gleiche Dichtwirkung auch bei einer entgegengesetzt zur Abbildung gezeigten Druckbeaufschlagung - in diesem Fall an der linken Schulter 28 - einstellt. Als Dichtringe eignen sich im besonderen Manteldichtringe, geschlitzte Dichtringe und Spiralbackringe, um nur einen kleinen Überblick über die Vielzahl der zur Verfügung stehenden Dichtringformen zu geben. Durch die beschriebene spezielle Abdichtung kann auf die kostenintensive Feinsttolerierung der Kolbenlauffläche verzichtet werden.

### Bezugszeichenliste

- 1: Pumpengehäuse
- 2: Pumpenzylinder
- 3: Kolben
- 4: Exzentergetriebe
- 5: Zylinderbohrung
- 6: Druckfeder
- 7: Arbeitsraum
- 8: Einlaßventil
- 9: Auslaßventil
- 10: Abschnitt
- 11: Ringraum
- 12: Dichtring
- 13: Gehäuseraum
- 14: Förderleitung
- 15: Bremskreis
- 16: Bremsdruckgeber
- 17: Leitung
- 18: Radbremse
- 19: Magnetventil
- 20: Magnetventil
- 21: Förderleitung
- 22: Niederdruckspeicher
- 23: Leitung
- 24: Dichtring
- 25: Kolbenringnut
- 26: Nutgrund
- 27: rechte Schulter
- 28: linke Schulter
- B: Breite (Dichtring)
- b: Breite (Kolbenringnut)
- s: Spiel

## Patentansprüche

1. Hydraulikpumpe, insbesondere für eine hydraulische Bremsschlupfregelanlage, mit einem Pumpengehäuse (1) und mit mindestens einem Arbeitsraum (7), der über ein Einlaßventil (8) und ein Auslaßventil (9) an Förderleitungen (14,21) anschließbar ist, und mit einem Kolben (3) der in seinem dem Arbeitsraum (7) zugewandte Bereich einen Dichtring (24) aufweist mittels dem er gegenüber dem Arbeitsraum (7) abgedichtet ist wobei der Kolben (3) durch ein Getriebe (4) zur Ausführung von Hubbewegungen antreibbar ist und wobei auf der dem Arbeitsraum (7) abgekehrten Seite ein den Kolben (3) umgebender und gegenüber dem Getriebe (4) abgedichteter Ringraum (11) vorgesehen ist, der mit einer an das Einlaßventil (8) oder das Auslaßventil (9) angeschlossenen Förderleitung (14,21) verbunden ist, dadurch **gekennzeichnet**, daß die auf die Wandung des Pumpenzylinders (2) wirksame Anpreßkraft des Dichtrings (24) proportional zum hydraulischen Druck im Arbeitsraum (7) einstellbar ist.

2. Hydraulikpumpe nach Anspruch 1, dadurch **gekennzeichnet**, daß die Breite (b) einer den Dichtring (24) aufnehmenden Kolbenringnut (25) größer ist als die Breite (B) des relativ zur Kolbenringnut (25) axial beweglichen Dichtrings (24).

3. Hydraulikpumpe nach Anspruch 1 oder 2, dadurch **gekennzeichnet**, daß der kleinste Durchmesser (d) des Kolbens (3) im Bereich der Kolbenringnut (25) kleiner ist, als das Nennmaß des relativ zur Kolbenringnut (25) hydraulisch veränderbaren Innendurchmessers (D) am Dichtring (24).

4. Hydraulikpumpe nach mindestens einem der vorhergehenden Ansprüche, dadurch **gekennzeichnet**, daß der Dichtring (24) einen im wesentlichen rechteckförmigen Profilquerschnitt aufweist.

5. Hydraulikpumpe nach mindestens einem der vorhergehenden Ansprüche 1 bis 4, dadurch **gekennzeichnet**, daß das aus der Maßdifferenz der Breite (b) der Kolbenringnut (25) und der Breite (B) des Dichtringes (24) gebildete Spiel (s) maximal 30 Mikrometer beträgt.

## Claims

1. A hydraulic pump, in particular for a hydraulic brake slip control system, comprising a pump housing (1) and at least one working chamber (7) which is connectible to supply lines (14, 21) through an inlet valve (8) and an outlet valve (9), and comprising a piston (3) which is furnished with a ring seal (24) in its area close to the working chamber (7) by which it is sealed in relation to the working chamber (7), the piston (3) being drivable by a gear unit (4) to perform stroke movements, there being provision of an annular chamber (11) on the side remote from the working chamber (7) which encloses the piston (3) and is sealed in relation to the gear unit (4) and which is connected to a supply line (14, 21) communicating with the inlet valve (8) or the outlet valve (9),
**characterized** in that the press-on force of the ring seal (24) acting on the wall of the pump cylinder (2) is adjustable proportionally to the hydraulic pressure in the working chamber (7).

2. A hydraulic pump as claimed in claim 1,
**characterized** in that the width (b) of a piston annular groove (25) accommodating the ring seal (24) is larger than the width (B) of the ring seal (24) which is axially movable in relation to the piston annular groove (25).

3. A hydraulic pump as claimed in claim 1 or 2,
**characterized** in that the smallest diameter (d) of the piston (3) in the area of the piston annular groove (25) is smaller than the nominal dimension of the internal diameter (D) at the ring seal (24), which diameter is hydraulically variable in relation to the piston annular groove (25).

4. A hydraulic pump as claimed in at least one of the preceding claims,
**characterized** in that the ring seal (24) has a substantially rectangular profile cross-section.

5. A hydraulic pump as claimed in at least one of the preceding claims 1 to 4,
**characterized** in that the clearance (s) which is formed of the dimensional difference between the width (b) of the piston annular groove (25) and the width (B) of the ring seal (24) amounts to maximally 30 micrometers.

## Revendications

1. Pompe hydraulique, notamment pour système de freinage à régulation du glissement de freinage de type hydraulique, comprenant un boîtier de pompe (1), au moins une chambre de travail (7), agencée de façon à pouvoir être raccordée à des conduites de refoulement (14, 21) par l'intermédiaire d'une valve d'entrée (8) et d'une valve de sortie (9), et un piston (3) qui, dans sa zone située du côté de la chambre de travail (7), comporte une bague d'étanchéité (24) au moyen de laquelle son étanchéité est assurée vis-à-vis de la chambre de travail (7), tandis que le piston (3) est agencé de façon à pouvoir être entraîné au moyen d'un mécanisme (4) en vue d'exécuter des mouvements de course et que, du côté opposé à la chambre de travail (7), il est prévu une chambre annulaire (11), entourant le piston (3), dont l'étanchéité est assurée vis-à-vis du mécanisme (4) et qui est reliée à une conduite de refoulement (14, 21) raccordée à la valve d'entrée (8) ou à la valve de sortie (9), caractérisée en ce que la force d'application de la bague d'étanchéité (24) qui exerce son action sur la paroi du cylindre de pompe (2) est réglable d'une manière proportionnelle à la pression hydraulique régnant dans la chambre de travail (7).

2. Pompe hydraulique selon la revendication 1, caractérisée en ce que la largeur (b) d'une gorge annulaire de piston (25) qui sert à loger la bague d'étanchéité (24) est supérieure à la largeur (B) de la bague d'étanchéité (24) qui est mobile axialement vis-à-vis de la gorge annulaire de piston (25).

3. Pompe hydraulique selon l'une des revendications 1 et 2, caractérisée en ce que le plus petit diamètre (d) du piston (3) dans la zone de la gorge annulaire de piston (25) est inférieur à la valeur nominale du diamètre intérieur (D) présenté par la bague d'étanchéité (24), lequel diamètre intérieur peut varier sous l'effet d'une action hydraulique vis-à-vis de la gorge annulaire de piston (25).

4. Pompe hydraulique selon au moins l'une des revendications précédentes, caractérisée en ce que la bague annulaire (24) comporte une section en coupe transversale qui est essentiellement rectangulaire.

5. Pompe hydraulique selon au moins l'une des revendications 1 à 4, caractérisée en ce que le jeu (s) formé par la différence de valeur entre la largeur (b) de la gorge annulaire de piston (25) et la largeur (B) de la bague d'étanchéité (24) est égal à 30 micromètres au maximum.
